(19) Europäisches Patentamt
European Patent Office
Office européen des brevets

(11) **EP 3 336 528 A1**

(12) **EUROPEAN PATENT APPLICATION**

(43) Date of publication:
**20.06.2018 Bulletin 2018/25**

(51) Int Cl.:
***G01N 27/333*** (2006.01)

(21) Application number: **16204848.2**

(22) Date of filing: **16.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Stichting IMEC Nederland**
**5656 AE  Eindhoven (NL)**

(72) Inventors:
• **ZEVENBERGEN, Marcel**
**3001 Leuven (BE)**
• **GOEDBLOED, Martijn**
**3001 Leuven (BE)**

(74) Representative: **AWA Sweden AB**
**P.O. Box 5117**
**200 71 Malmö (SE)**

(54) **ION-SELECTIVE ELECTRODE**

(57)    A micromachined ion-selective electrode for an ion-selective sensor is provided. The ion-selective electrode includes a reservoir that is arranged to contain electrolyte, a contacting electrode that is arranged at least partially within the reservoir to contact electrolyte in the reservoir, and an ion-selective membrane that is arranged to contact a bulk solution under test. The ion-selective electrode further includes a constriction (e.g. a microfluidic channel or micro-pore) for providing an ionic connection between the bulk solution and electrolyte in the reservoir via the ion-selective membrane. Provided is also an ion-selective sensor that includes at least one such micromachined ion-selective electrode.

*Fig. 1*

## Description

Technical field

The present disclosure relates to the field of potentiometric sensors. In particular, the present disclosure relates to a micromachined ion-selective electrode for an ion-selective sensor.

Background

By measuring potential difference, potentiometric sensors may be used to determine analytical concentration of components in a gas or solution. By measuring a voltage that scales with the concentration of ions, such a sensor may be used to determine for example a pH value of the solution under test.

Usually, a potentiometric sensor works by measuring the potential difference between a reference electrode and a working electrode, where the potential of the latter is sensitive to the concentration of one or more ions. To measure a specific ion, the working electrode may be made ion-selective, and a combination of a reference electrode and such an ion-selective electrode may form an ion-selective sensor.

To create an ion-selective electrode, an ion-selective membrane is often placed between a contact (or contacting electrode) of the ion-selective electrode and the solution to be tested. The ion-selective membrane, which may chemically interact only with certain ions, allows the potential of the contact of the ion-selective electrode to depend on the concentration of the allowed ions. The reference electrode, which is not ion-selective, is normally not provided with such an ion-selective membrane.

During operation of the ion-selective sensor, the reference electrode and the ion-selective electrode are immersed at least partially in the (bulk) solution to be tested, and the potential difference between the reference electrode and the ion-selective electrode is measured in order to determine the concentration of the ion(s) for which the ion-selective electrode is selective.

To increase the stability of the ion-selective sensor and to better define the interfacial potentials, the contact of the ion-selective electrode is normally not allowed to come in direct contact with the ion-selective membrane and the solution to be tested. Instead, a reservoir filled with electrolyte with known composition is positioned between the contact of the ion-selective electrode and the solution in order to reduce drift. In micromachined ion-selective sensors, the volume for such an electrolyte reservoir is limited, making it more difficult to achieve long-term stability of the sensor.

In light of the above, there is a requirement for a micromachined ion-selective sensor which may offer improved long-term stability.

Summary

An object of the present disclosure is therefore to at least partially fulfill the above requirements. This and other objects are achieved by means of a micromachined ion-selective electrode for an ion-selective sensor as defined in the independent claim. Other embodiments are defined by the dependent claims.

According to one aspect of the present disclosure, the ion-selective electrode may include a reservoir that is arranged to contain electrolyte. The electrolyte may be provided in the reservoir during production of the ion-selective electrode, or the electrolyte may be added at a later stage.

The ion-selective electrode may include a contacting electrode that is arranged at least partially within the reservoir to contact electrolyte in the reservoir, and the ion-selective electrode may also include an ion-selective membrane that is arranged to contact a bulk solution under test.

The ion-selective electrode may include a constriction that may provide an ionic connection between the bulk solution (under test) and electrolyte in the reservoir via the ion-selective membrane.

By providing the constriction, movement of ions to and/or from the electrolyte in the reservoir to the bulk solution may be reduced, and for example leaching of ions from the electrolyte may be avoided. This may improve the long-term stability of the ion-selective electrode. By improving the long-term stability also for the ion-selective electrode, and not only for a reference electrode, the long-term stability of the ion-selective sensor in which the ion-selective electrode is included may also be improved.

In one or more embodiments of the present disclosure, a ratio between a cross-sectional area (A) of the constriction multiplied with a diffusion coefficient (D) of ions in electrolyte in the reservoir and a length (L) of the constriction multiplied with a volume (V) of the reservoir may be smaller than 1, i.e. $D \times A/(L \times V) < 1$. By keeping this time constant low, long-term stability of the ion-selective electrode may be increased. It should be realized that the low time constant of the constriction may be achieved by making the cross-sectional area (A) small and/or by making the length of the constriction (L) large.

In one or more embodiments, the constriction may include at least part of the ion-selective membrane. Inclusion of at least part of the ion-selective membrane in the constriction may allow for e.g. a more compact electrode design. Similarly, in one or more embodiments, the constriction may include electrolyte.

In one or more embodiments, the constriction may form a pore. Thus, a small cross-sectional area of the constriction may be used in order to achieve the long-term stability of the ion-selective electrode. Here, a pore may be defined as a passage for which the length is comparable to or smaller than the width. If the pore has a circular or oval cross-section, the length of the pore may be comparable to a diameter of the pore. If a width and height of the cross-section of the pore may be defined, it is envisaged that the length of the pore may be comparable to an effective diameter proportional to the square-root of the product of the height and width of the pore.

In one or more embodiments, the constriction may form a meandering structure. A meandering structure may allow for a longer constriction to be formed within a limited area. The meandering structure may for example be S-shaped, U-shaped or a combination of one or many such shapes.

In one or more embodiments, the ion-selective membrane and the reservoir may be connected via the constriction, and the ion-selective membrane and the reservoir may be ionically disconnected except for an ionic connection provided by electrolyte contained in the constriction.

In one or more embodiments, the contacting electrode may include at least one of a metal, a metal oxide or carbon. Preferably, the contacting electrode may be formed from Ag/AgCl, but it is envisaged that also other materials may be used such as IrOx (in contact with an electrolyte having e.g. a fixed pH).

In one or more embodiments, the electrolyte may include at least one of a hydrogel or an ionic liquid (e.g. a salt in liquid form).

In one or more embodiments, the electrolyte may contain at least one component of the ion-selective membrane (such as an ionophore) at a concentration comparable to or exceeding that of the maximum solubility of the component in the electrolyte. This may be advantageous in that it may prevent or at least partially prevent the component from escaping from the ion-selective membrane into the electrolyte, leading to a prevented or an at least reduced degradation of the ion-selective membrane over time.

According to one aspect of the present disclosure, an ion-selective sensor is provided that may include at least one micromachined ion-selective electrode as described above. By using an ion-selective electrode in accordance with the present disclosure, the long-term stability of the ion-selective sensor may be improved due to the improved stability and reduced drift also of the ion-selective electrode and not only that of the reference electrode.

In one or more embodiments, ion-selective sensor may include a micromachined reference electrode. The reference electrode may include a reference reservoir that is arranged to contain electrolyte. The reference electrode may include a reference contacting electrode that is arranged to contact electrolyte in the reference reservoir. The reference electrode may also include a constriction arranged to contain electrolyte and to form an ionic connection between the bulk solution (under test) and electrolyte in the reference reservoir. By using a reference electrode having a constriction, the ions may be prevented from moving to/from the electrolyte in the reservoir, and an unwanted change of concentration of the ions in the electrolyte may be prevented or at least reduced. This may improve the long-term stability of the reference electrode, and the long-term stability of the ion-selective sensor.

In one or more embodiments, the at least one micromachined ion-selective electrode and the micromachined reference electrode may be micromachined on/in a same substrate. By fabricating both the reference electrode and the ion-selective electrode on or in the same substrate, the production process may be facilitated in terms of e.g. speed, effort and cost.

In one or more embodiments, the reservoir (associated with the at least one ion-selective electrode) and the reference reservoir may be provided with a common cap. By only having to provide a single cap, the fabrication and production process may be facilitated.

In one or more embodiments, the ion-selective sensor may include at least two micromachined ion-selective electrodes as defined above. The at least two micromachined ion-selective electrodes may be selective for different ion types. By having multiple ion-selective electrodes selective for different ions, a wider applicable ion-selective sensor may be provided, that may be adapted for different applications, e.g. to measure different types of ions.

It is also envisaged that an ion selective sensor may include two or more ion-selective electrodes and no reference electrode. With such an ion-selective sensor, differential measurements between the two or more ion-selective electrodes may be taken and relative difference in concentration of different ions may be measured. Such a sensor may for example be used to differentiate between different types of liquids.

The present disclosure relates to all possible combinations of features mentioned herein, including the ones listed above as well as other features which will be described in what follows with reference to different embodiments. Any embodiment described herein may be combinable with other embodiments also described herein, and the present disclosure relates also to all such combinations.

Brief description of the drawings

The above, as well as additional objects, features, advantages and applications of the inventive micromachined ion-selective reference electrode, will be better understood through the following illustrative and non-limiting detailed description of embodiments. Reference is made to the appended drawings, in which:

Figure 1 illustrates a cross section of a micromachined ion-selective electrode for an ion-selective sensor according to one or more embodiments of the present disclosure;
Figures 2a and 2b illustrate cross sections of micromachined ion-selective electrodes for an ion-selective sensor according to embodiments of the present disclosure;

Figure 3 illustrates a cross section of a micromachined ion-selective electrode for an ion-selective sensor according to one or more embodiments of the present disclosure;

Figure 4 illustrates a cross section of a micromachined ion-selective electrode for an ion-selective sensor according to one or more embodiments of the present disclosure;

Figure 5 illustrates a cross section of a micromachined ion-selective electrode for an ion-selective sensor according to one or more embodiments of the present disclosure, and

Figure 6 illustrates a cross section of an ion-selective sensor according to one or more embodiments of the present disclosure.

In the drawings, like reference numerals will be used for like elements unless stated otherwise. Unless explicitly stated to the contrary, the drawings show only such elements that are necessary to illustrate the example embodiments, while other elements, in the interest of clarity, may be omitted or merely suggested.

Detailed description

Exemplifying embodiments will now be described more fully hereinafter with reference to the accompanying drawings. The drawings show currently preferred embodiments, but the invention may, however, be embodied in many different forms and should not be construed as limited to the embodiments set forth herein; rather, these embodiments are provided for thoroughness and completeness, and fully convey the scope of the present disclosure to the skilled person.

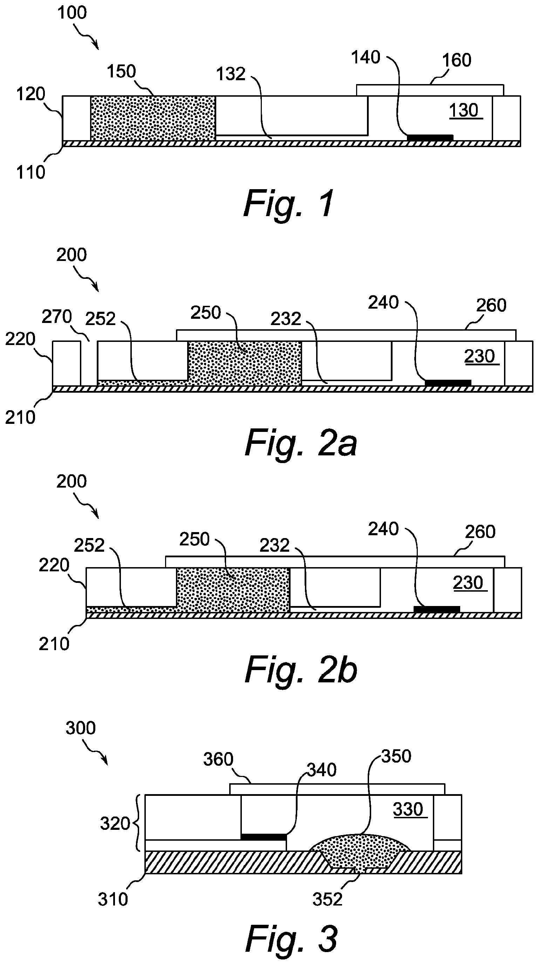

Figure 1 illustrates a cross section of a micromachined ion-selective electrode 100 for an ion-selective sensor in accordance with one or more embodiments of the present disclosure.

The ion-selective 100 electrode includes a substrate 110, on which a layer 120 is formed that defines a reservoir 130 that is arranged to contain electrolyte. A contacting electrode 140 is arranged within the reservoir 130 to contact electrolyte in the reservoir 130.

An ion-selective membrane 150 is arranged to contact a bulk solution that is to be tested, where the bulk solution may surround at least part of the ion-selective electrode 100 during testing of the bulk solution. The membrane may isolate the bulk solution from electrolyte in the reservoir.

The layer 120 is formed such that a constriction 132 is provided. The constriction 132 provides an ionic connection between the bulk solution and electrolyte in the reservoir 130 via the ion-selective membrane 150, but may prevent or at least reduce movement of ions to/from electrolyte in the reservoir 130 from/to the ion-selective membrane 150. The reservoir 130 is sealed with a cap 160 that is arranged on top of the layer 120.

The contacting electrode 140 may be formed e.g. by photolithography or screen-printing techniques. The electrolyte in the reservoir 130 may for example be water with a fixed amount of for example KCl or a hydrogel such as agarose or polyhydroxyethylmethacrylate (pHEMA), in combination with for example KCl. In this or other embodiments, the electrolyte may be modified with components of the ion-selective membrane, with concentrations comparable to or exceeding the maximum solubility. By so doing, escape of the components from the ion-selective membrane 150 may be limited, and degradation of the ion-selective membrane 150 may be prevented or at least reduced.

The internal reservoir 130 for the ion-selective electrode 100 is separated from the ion-selective membrane 150 by the constriction 132. In this example, the constriction 132 is a microfluidic channel with a cross sectional area (A) that is substantially smaller than the length (L) of the channel, such that the condition

$$\frac{D \times A}{L \times V_{res}} < 1$$

is fulfilled, where D is a diffusion constant of the ions in the electrolyte, and where $V_{res}$ is a volume of the reservoir 130. By keeping this time constant low, movement of ions to/from the electrolyte in the reservoir 130 may be limited, and for example leaching of ions in the electrolyte and corresponding changes in concentration may be reduced. By adjusting the dimensions of the constriction 132, the transport or movement of ions to/from the electrolyte in the reservoir 130 may be reduced, while the constriction 132 still allows for an ionic contact to form between the ions in the electrolyte in the reservoir 130 and in the bulk solution at least partly surrounding the ion-selective electrode 100. This may provide an ion-selective electrode 100 having an improved long-term stability.

Figure 2a illustrates a cross section of a micromachined ion-selective electrode 200 for an ion-selective sensor in accordance with another embodiment of the present disclosure.

Here, the ion-selective electrode 200 also includes a substrate 210, on which a layer 220 is formed that defines a reservoir 230 that is arranged to contain electrolyte. The layer also defines a space for an ion-selective membrane 250, and an opening 270 into which a bulk solution that at least partly surrounds the ion-selective electrode 200 may enter during testing. A contacting electrode 240 is arranged within the reservoir 230 to contact electrolyte in the reservoir 230. The layer 220 is formed such that a constriction 232 and a second constriction 252 are formed. The constriction 232 forms an ionic connection between the internal reservoir 230 and the ion-selective membrane 250, and the second constriction 252 is arranged such that it forms a connection to the opening 270 to contact the bulk solution. Part of the ion-selective membrane 250 is provided in the second constriction 252. Both the internal reservoir 230 and the space for the ion-selective membrane 250 are sealed with a same cap 260 that is arranged on the layer 220.

Like in the ion-selective electrode 100 illustrated in Figure 1, the internal reservoir 230 is separated from the ion-selective membrane 250 by the constriction 252, which prevents or at least partially prevents ions from moving to/from the internal reservoir 130 from/to the ion-selective membrane 250. The constriction 252 may therefore help to prevent or reduce e.g. contamination of the electrolyte with ions from the bulk solution. In addition, ions or molecules are prohibited or at least partially prohibited from moving to/from the ion-selective membrane 250 from/to the bulk solution by the second constriction 252. This may allow for an improved long-term stability, as both the constriction 232 and the second constriction 252 prohibits or at least partly prohibits an unwanted change of concentration of ions in electrolyte in the reservoir 230 of the ion-selective electrode 200.

Figure 2b illustrates a cross section of a micromachined ion-selective electrode for an ion-selective sensor according to another embodiment of the present disclosure.

In contrast to Figure 2a, Figure 2b illustrates an ion-selective electrode 200 wherein the constriction 252 is arranged to directly contact a bulk solution that at least partly surrounds the ion-selective electrode 200 during testing. By allowing the constriction 252 to end at the sidewall of the ion-selective electrode formed by the layer 220, an opening such as the opening 270 in Figure 2a may not be required, and fabrication of the ion-selective electrode 200 may be facilitated, e.g if the ion-selective electrode 200 is formed on a flexible substrate. Otherwise, the description of the ion-selective electrode 200 above with reference to Figure 2a applies also to the ion-selective electrode 200 as illustrated in Figure 2b.

Figure 3 illustrates a cross section of a micromachined ion-selective electrode for an ion-selective sensor according to another embodiment of the present disclosure.

Here, a layer 320 is formed on a substrate 310, and the layer 320 (which may be a single layer or include multiple layers formed during different steps of fabrication) forms a reservoir 330 that is arranged to contain electrolyte. A contacting electrode 340 is arranged within the reservoir 330 to contact electrolyte in the reservoir 330. Here, the contacting electrode 340 is illustrated as being positioned on the layer 320, but it is also envisaged that the contacting electrode 340 may be placed elsewhere, e.g. directly on the substrate 310, as long as it may contact electrolyte in the reservoir 330.

In the substrate 310, a constriction in the form of a pore 352 is formed which provides an opening to a bulk solution that may at least partly surround the ion-selective electrode 300 during testing. An ion-selective membrane 350 is arranged within the reservoir and in the pore 352 to contact the bulk solution under test through the pore 352. The reservoir 330 is sealed by a cap 360 that is arranged on the layer 320.

The pore may prohibit or at least partly prohibit (i.e., slow down) moving of ions to/from the electrolyte through the ion-selective membrane 350, thereby improving long-term stability of the ion-selective electrode 300. A pore is here preferably defined as a passage which has a length that is comparable to or smaller than a width of the passage. Instead of using a width, the pore may be defined as a passage which has a length that is comparable to or smaller than a diameter of the pore (in case e.g. the pore has a circular cross-section), or an effective diameter defined as for example

$$d^* = 2\sqrt{(h \times w)/\pi},$$ where h is the height and w is the width of the cross-section of the pore (if applicable).

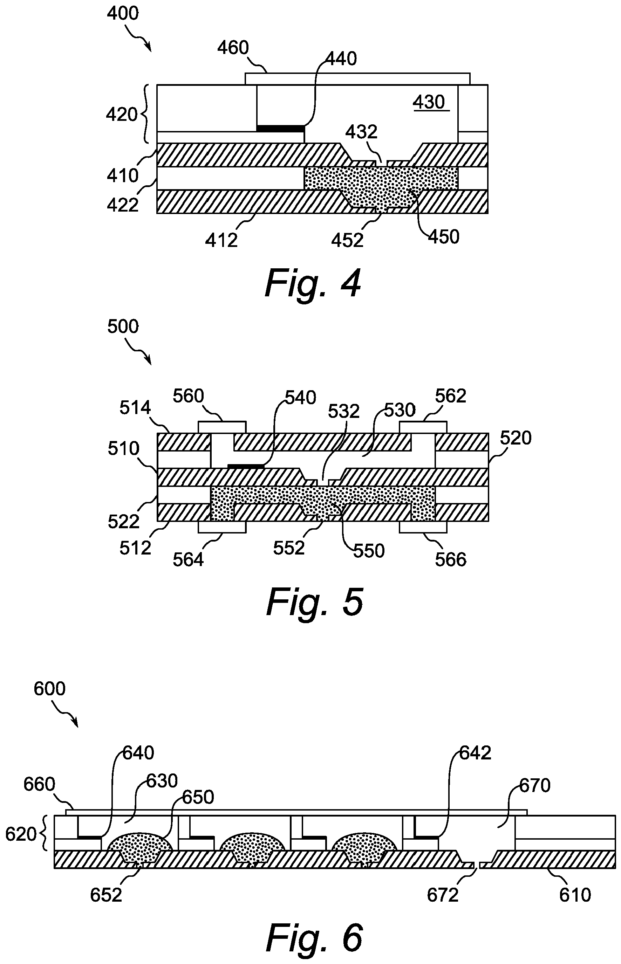

Figure 4 illustrates a cross section of a micromachined ion-selective electrode for an ion-selective sensor according to another embodiment of the present disclosure.

The ion-selective electrode 400 includes a substrate 410 on which a layer 420 (which may be a single layer, or multiple layers formed during multiple production steps) is formed. The layer 420 defines a space for a reservoir 430 which is arranged to contain electrolyte. A contacting electrode 440 is arranged within the reservoir 430 to contact electrolyte in the reservoir 430. In the substrate 410, a pore 432 is formed. The reservoir 430 is sealed by a cap 460 that is arranged on the layer 420.

In addition, the ion-selective electrode 400 includes a second substrate 412 on which a second layer 422 is formed. The second substrate 412 and the second layer 422 are formed below the substrate 412. The second layer 422 defines a space for an ion-selective membrane 450, and a second pore 452 is formed in the second substrate 412. The second pore 412 forms an opening to a bulk solution which, under test, may at least partly surround the ion-selective electrode 400. Part of the ion-selective membrane 450 is arranged in the second pore 452, and in contact with the bulk solution. The pore 432 provides an ionic connection between electrolyte in the reservoir 430 and the ion-selective membrane 450. Together, the pore 432 and the second pore 452 provides an ionic connection between electrolyte in the reservoir 430 and the bulk solution, via the ion-selective membrane 450.

Like in the ion-selective electrode 200 in Figure 2a or in Figure 2b, the pore 432 and the second pore 452 prohibits or at least partly prohibits ions in the electrolyte to escape to the ion-selective membrane and further into the bulk solution. This may offer improved long-term stability of the ion-selective electrode 400.

Figure 5 illustrates a cross section of an ion-selective electrode for an ion-selective sensor according to another embodiment of the present disclosure.

Here, the ion-selective electrode 500 is similar to the ion-selective electrode 400 described above with reference to Figure 4, and contains a substrate 510, a layer 520 which defines a reservoir 530 for containing electrolyte, a contacting electrode 540 arranged within the reservoir 540 for contacting electrolyte in the reservoir 530, a pore 532 in the substrate 510, a second substrate 512, a second layer 522 defining a space for an ion-selective membrane 550 which contacts a bulk solution at least partly surrounding the ion-selective electrode 500 via a second pore 552 formed in the second substrate 512. In addition, the ion-selective electrode 500 includes access holes for e.g. filling of electrolyte and/or ion-selective membrane. The access holes for filling of electrolyte in the reservoir 530 are formed in a third substrate 514 arranged on top on the layer 520, and the holes are sealed with caps 560 and 562 arranged on the third substrate 514. Holes for filling of ion-selective membrane 550 are formed in the second substrate 512, and closed by caps 564 and 566 arranged below the second substrate 512.

Figure 6 illustrates a cross section of an ion-selective sensor according to an embodiment of the present disclosure.

The ion-selective sensor 600 includes a substrate 610 and a layer 620 formed on the substrate 610. Together, the substrate 610 and the layer 620 (which may be formed as a single layer or from multiple layers) defines three ion-selective electrodes as defined above. Each ion-selective electrode includes a reservoir 630 for containing electrolyte, a contacting electrode 640 for contacting electrolyte in the reservoir 630 and an ion-selective membrane 650 that contacts a surrounding bulk solution via a pore 652 formed in the substrate 610. Although the ion-selective sensor 600 in Figure 6 is shown having three such ion-selective electrodes, it is envisaged that the ion-selective sensor 600 may have fewer (e.g. two) or more (e.g. four, five, etc.) ion-selective electrodes. The ion-selective electrodes may be adapted (e.g. by having different ion-selective membranes) to be selective for different ion types, or some or all of the ion-selective electrodes may be adapted to be selective to the same ion type. For instance, a PVC membrane containing the ionophore valinomycin is sensitive to potassium, while a membrane containing nonactin is sensitive to ammonium.

The ion-selective sensor 600 may also include a conventional reference electrode or a reference electrode as shown in Figure 6, which includes a reservoir 670 arranged to contain electrolyte, a contacting electrode 642 for contacting electrolyte in the reservoir 670, and where electrolyte in the reservoir 670 is in contact with the bulk solution via a pore 672 formed in the substrate 610. Here, the reference electrode does not contain an ion-selective membrane.

In the ion-selective sensor 600, the reservoirs 630 of the ion-selective electrodes and the reservoir 670 of the reference electrode are sealed with a common cap 660 which is arranged on the layer 620. As shown in Figure 6, the ion-selective electrodes and the reference electrodes are micromachined in or on the same substrate 610.

It is also envisaged that the ion-selective sensor 600 as illustrated in Figure 6 need not contain any reference electrode. Even without the reference electrode, the ion-selective sensor 600 would allow for differential measurements to be performed between two or more ion-selective electrodes, and the relative difference in concentration between different ions (if the two or more ion-selective electrodes are sensitive to different ions) may be measured. This may for example be useful in order to identity different types of liquids by their difference in relative concentration of certain ions.

Herein, a substrate may be formed from a material including for example silicon, glass or a foil or any other suitable material. The substrate may also be part of e.g. a printed circuit board (PCB) on which the ion-selective electrode and/or an ion-selective sensor is formed.

Herein, a contacting electrode is illustrated as being arranged on a top surface of either a layer or a substrate. It is, however, envisaged to arrange a contacting electrode also on other surfaces, such as side walls or bottom surfaces of e.g. layers or substrates. Any position of a contacting electrode is possible as long as the contacting electrode at least partially may contact electrolyte in a reservoir. The contacting electrode does not necessarily have to be positioned within a reservoir, but may instead be positioned somewhere else as long as the above condition of being able to contact electrolyte in the reservoir (e.g. through a channel) is fulfilled. A contacting electrode may be made from a material including AgCl or a metal oxide such as iridium oxide (IrOx), ruthenium oxide (RuO), gold, platinum, carbon or another material that may undergo charge transfer with ions in the electrolyte in the reservoir. Contacting electrodes may be formed by using e.g. sputtering or screen-printing or by other suitable techniques.

Herein, layers forming e.g. side walls of a reservoir, or side walls of constrictions and similar, may be made from a material including for example polymer, polydimethylsiloxane, SU-8 or plastic, formed by for instance spin coating, spray coating, injection molding or overmolding.

Herein, an ion-selective membrane may be formed from a material including e.g. polyvinyl chloride (PVC), carbon paste or siloprene. Ionophores may be added to the ion-selective membrane in order to make it selective for certain ions in a solution to be tested).

Herein, a constriction (such as a pore or microfluidic channel) are illustrated as being defined by layers. It is, however, envisaged that a constriction may be formed in and/or defined by other structures, such as a ceiling of a reservoir. For example, a microfluidic channel and/or a pore may go through a substrate, a wall or a ceiling. The function of the constriction lies primarily in its ability to provide a passage having a limited cross-section that connects two regions, and not in its exact position within the reference-electrode as long as it connects the two regions in question.

By providing, in accordance with the present disclosure, an ion-selective electrode in which a constriction limits the movement and transfer (e.g. diffusion) of ions to/from electrolyte in a reservoir, the long-term stability of such an ion-selective electrode may be improved. By improving the long-term stability not only of the reference electrode (using known techniques) but also of the ion-selective electrode, the long-term stability of an ion-selective sensor using such an ion-selective electrode may be improved. This may especially be relevant for a micromachined ion-selective sensor.

The person skilled in the art realizes that the present disclosure is by no means limited to the embodiments described above. On the contrary, many modifications and variations are possible within the scope of the appended claims.

Although features and elements are described above in particular combinations, each feature or element may be used alone without the other features and elements or in various combinations with or without other features and elements.

Additionally, variations to the disclosed embodiments can be understood and effected by the skilled person in practicing the claimed invention, from a study of the drawings, the disclosure, and the appended claims. In the claims, the word "comprising" does not exclude other elements, and the indefinite article "a" or "an" does not exclude a plurality. The mere fact that certain features are recited in mutually different dependent claims does not indicate that a combination of these features cannot be used to advantage.

**Claims**

1. A micromachined ion-selective electrode for an ion-selective sensor, said ion-selective electrode comprising:

   a reservoir arranged to contain electrolyte;
   a contacting electrode arranged at least partly within the reservoir to contact electrolyte in the reservoir;
   an ion-selective membrane arranged to contact a bulk solution under test, and
   a constriction for providing an ionic connection between the bulk solution and electrolyte in the reservoir via the ion-selective membrane.

2. The micromachined ion-selective electrode of any claim 1, wherein a ratio between a cross-sectional area (A) of the constriction multiplied with a diffusion coefficient (D) of ions in electrolyte in the reservoir and a length (L) of the constriction multiplied with a volume (V) of the reservoir is smaller than

$$1 \ [D \times A/(L \times V) < 1]$$

3. The micromachined ion-selective electrode of claim 1 or 2, wherein the constriction comprises at least part of the ion-selective membrane.

4. The micromachined ion-selective electrode of any one of claims 1-3, wherein the constriction comprises electrolyte.

5. The micromachined ion-selective electrode of any one of the preceding claims, wherein the constriction forms a pore.

6. The micromachined ion-selective electrode of any one of the preceding claims, wherein the constriction forms a meandering structure.

7. The micromachined ion-selective electrode of any one of the preceding claims, wherein the ion-selective membrane and the reservoir are connected via the constriction, and wherein the ion-selective membrane and the reservoir are ionically disconnected except for an ionic connection provided by electrolyte contained in the constriction.

8. The micromachined ion-selective electrode of any one of the preceding claims, wherein the ion-selective membrane is arranged in a space defined by walls, wherein an aperture in a wall provides an opening of the space into a second constriction further comprising at least part of the ion-selective membrane and arranged to contact the bulk solution.

9. The micromachined ion-selective electrode of any one of the preceding claims, wherein the contacting electrode comprises at least one of a metal, a metal oxide or carbon.

10. The micromachined ion-selective electrode of any one of the preceding claims, wherein electrolyte in the reservoir comprises at least one of a hydrogel or an ionic liquid.

11. The micromachined ion-selective electrode of any one of the preceding claims, wherein electrolyte in the reservoir comprises at least one component of the ion-selective membrane at a concentration comparable to or exceeding that of the maximum solubility of said component.

12. An ion-selective sensor, comprising at least one micromachined ion-selective electrode according to any one of claims 1-11.

13. The ion-selective sensor of claim 12, further comprising a micromachined reference electrode, wherein said micromachined reference electrode comprises:

a reference reservoir arranged to contain electrolyte;

a reference contacting electrode arranged to contact electrolyte in the reference reservoir, and

a constriction arranged to contain electrolyte and to form an ionic connection between the bulk solution and electrolyte in the reference reservoir.

14. The ion-selective sensor of claim 13, wherein the at least one micromachined ion-selective electrode and the micromachined reference electrode are micromachined on/in a same substrate.

15. The ion-selective sensor of claim 14, wherein the reservoir and the reference reservoir are provided with a common cap.

16. The ion-selective sensor of any one of claims 12-15, comprising at least two micromachined ion-selective electrodes, wherein said at least two micromachined ion-selective electrodes are selective for different ion types.

*Fig. 1*

*Fig. 2a*

*Fig. 2b*

*Fig. 3*

400

460    440

420 {    430

410

422    432

412    452    450

*Fig. 4*

500

514    560    540    532    530    562

510    520

522

512    564    552    550    566

*Fig. 5*

600

640    642

660    630    650    670

620 {

652    672    610

*Fig. 6*

Europäisches
Patentamt

European
Patent Office

Office européen
des brevets

# EUROPEAN SEARCH REPORT

Application Number

EP 16 20 4848

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 199 29 264 A1 (KNOLL MEINHARD [DE]) 11 January 2001 (2001-01-11)<br><br>* figures 1, 3a, 3c, 4a, 7 *<br>* column 3, line 30 - line 34 *<br>* column 7, line 51 - line 58 *<br>* column 3, line 28 - line 44 *<br>* column 2, line 66 - column 3, line 2 *<br>* column 7, line 57 *<br>* column 5, line 53 - line 55 *<br>* column 5, line 19 - line 25 *<br>----- | 1-5, 7-10, 12-16 | INV.<br>G01N27/333 |
| X<br>Y | US 2011/308946 A1 (WILKE STEFAN [DE]) 22 December 2011 (2011-12-22)<br>* figures 4, 8a, 8b *<br>* paragraph [0032] *<br>* paragraph [0079] *<br>* paragraph [0029] *<br>* paragraph [0015] *<br>* paragraph [0007] *<br>* column 4, line 35 - line 47 *<br>----- | 1-3,5, 12-16<br>6,11 | |
| X | US 2015/219589 A1 (GENERELLI SILVIA [CH] ET AL) 6 August 2015 (2015-08-06)<br>* figures 1, 3d, 11 *<br>* paragraph [0073] - paragraph [0077] *<br>* paragraph [0096] *<br>----- | 1,2,7-9, 12,16 | TECHNICAL FIELDS SEARCHED (IPC)<br><br>G01N<br>B01L |
| Y | US 2011/192720 A1 (BLAUW MICHIEL [NL] ET AL) 11 August 2011 (2011-08-11)<br>* figure 1a *<br>* paragraph [0012] *<br>* paragraph [0015] *<br>----- | 6 | |
| Y | US 5 445 726 A (CAMMANN KARL [DE]) 29 August 1995 (1995-08-29)<br>* column 4, line 35 - line 47 *<br>----- | 11 | |

-/--

The present search report has been drawn up for all claims

| Place of search | Date of completion of the search | Examiner |
|---|---|---|
| Munich | 14 March 2017 | Melzer, Katharina |

EPO FORM 1503 03.82 (P04C01)

Europäisches
Patentamt

European
Patent Office

Office européen
des brevets

## EUROPEAN SEARCH REPORT

Application Number

EP 16 20 4848

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 4 814 060 A (BANKS RODNEY H [US]) 21 March 1989 (1989-03-21) * column 2, line 65 - column 3, line 2 * * column 6, line 24 - line 27 * ----- | 11 | |
| | | | TECHNICAL FIELDS SEARCHED (IPC) |

The present search report has been drawn up for all claims

| Place of search | Date of completion of the search | Examiner |
|---|---|---|
| Munich | 14 March 2017 | Melzer, Katharina |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

............................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 16 20 4848

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2017

| Patent document cited in search report | | Publication date | Patent family member(s) | | Publication date |
|---|---|---|---|---|---|
| DE 19929264 | A1 | 11-01-2001 | DE | 19929264 A1 | 11-01-2001 |
| | | | EP | 1196768 A2 | 17-04-2002 |
| | | | JP | 2003503702 A | 28-01-2003 |
| | | | WO | 0101120 A2 | 04-01-2001 |
| US 2011308946 | A1 | 22-12-2011 | CH | 702559 B1 | 15-03-2012 |
| | | | CN | 102265146 A | 30-11-2011 |
| | | | DE | 102008055084 A1 | 24-06-2010 |
| | | | US | 2011308946 A1 | 22-12-2011 |
| | | | WO | 2010072510 A1 | 01-07-2010 |
| US 2015219589 | A1 | 06-08-2015 | EP | 2885633 A1 | 24-06-2015 |
| | | | US | 2015219589 A1 | 06-08-2015 |
| | | | WO | 2014027051 A1 | 20-02-2014 |
| US 2011192720 | A1 | 11-08-2011 | EP | 2363705 A1 | 07-09-2011 |
| | | | US | 2011192720 A1 | 11-08-2011 |
| US 5445726 | A | 29-08-1995 | AT | 172792 T | 15-11-1998 |
| | | | DE | 4226630 A1 | 14-10-1993 |
| | | | EP | 0588984 A1 | 30-03-1994 |
| | | | US | 5445726 A | 29-08-1995 |
| | | | WO | 9321520 A1 | 28-10-1993 |
| US 4814060 | A | 21-03-1989 | NONE | | |

EPO FORM P0459

For more details about this annex : see Official Journal of the European Patent Office, No. 12/82